Europäisches Patentamt

European Patent Office

Office européen des brevets

(11) Publication number: **0 016 640**
**B1**

(19)

(12) **EUROPEAN PATENT SPECIFICATION**

(45) Date of publication of patent specification: **02.05.84**

(21) Application number: **80300849.9**

(22) Date of filing: **19.03.80**

(51) Int. Cl.³: **C 08 L 5/00** //C08B37/00, C09K7/00

(54) Xanthan gum slurries.

(30) Priority: **23.03.79 US 23511**

(43) Date of publication of application:
**01.10.80 Bulletin 80/20**

(45) Publication of the grant of the patent:
**02.05.84 Bulletin 84/18**

(84) Designated Contracting States:
**FR GB NL**

(56) References cited:
**CH - A - 599 275**
**CH - A - 599 276**
**FR - A - 2 243 228**
**FR - A - 2 362 893**

**CRC HANDBOOK OF CHEMISTRY AND PHYSICS, 60th ED., pp. C337, C-419 DICTIONARY OF ORGANIC COMPOUNDS, p. 2632**

(73) Proprietor: **MERCK & CO. INC.**
**126, East Lincoln Avenue P.O. Box 2000 Rahway New Jersey 07065 (US)**

(72) Inventor: **Pickens, Patrick A**
**7956-A Mission Center Court**
**San Diego California, 92108 (US)**
Inventor: **Lindroth, Thomas A**
**11341 Markab Drive**
**San Diego California 92126 (US)**
Inventor: **Carico, Robert D**
**(c/o Ryen Caenn) 3189-C Airway Avenue**
**Costa Mesa California 92626 (US)**

(74) Representative: **Crampton, Keith John Allen et al, D YOUNG & CO 10 Staple Inn London WC1V 7RD (GB)**

# 0 016 640

## Xanthan gum slurries

U.S. Patent 3,894,880 discloses the method of thickening alcohol/water solvent systems with xanthan gum. This system is then used to suspend a slurry of alginates. U.S. Patent 3,894,879 discloses the method of thickening alcohol/water solvent systems with hydroxypropyl cellulose.

Other art includes mechanical and chemical means of improving the dispersibility of xanthan gum and other hydrophilic colloids. Mechnical mixers are not completely effective. Chemical means consist of either treating the colloid with materials such as dialdehydes that delay hydration or slurrying the polymer. The slurries of prior art have two major disadvantages. First, to remain pourable these slurries are limited to polymer concentrations well below 50%. Secondly, volatile solvents in these slurry formulations evaporate when exposed to the atmosphere leaving a crusty film of dried polymer on the surface of the slurry. This crust resists reconstitution into the slurry and is not dispersible in water.

In accordance with the present invention a polymer slurry comprises 20—75 weight % of fine mesh xanthan gum; 20—75 weight % hydrophobic solvent base (as defined below); 0.05—0.25 weight % suspending agent; optionally 0.5—1 weight % thinning agent, optionally 0.1—7.0 weight % dispersant and optionally 2.5 weight % methanol. By incorporating a thinning agent such as lecithin, pourable slurries at polymer concentrations exceeding 50% can be obtained. The solvent base used in accordance with the present invention, as well as being hydrophobic, is considerably less volatile than that of the prior art and crust formation can be substantially avoided.

The total weight of polymer in the final composition is from 20—75 weight %. A finely divided form of polymer is preferable (200-mesh, Tyler screen or finer) to achieve these levels. The sieve opening is 0.074 mm in this 200-mesh screen.

The term "hydrophobic solvent base" herein means an anhydrous solvent, i.e. one containing less than 0.1% water, that is insoluble in water, does not solvate or swell hydrophilic colloids, that has a melting point of no more than 30°C and a vapor pressure at 20°C of no more than 1 torr (133 Pa), and that is one or more of the following: mineral oil, diesel oil, kerosene, a mixture of diesel oil or kerosene with a $C_{6-12}$ alcohol, vegetable oil, an ester-alcohol, e.g., 2,2,4-trimethyl-pentanediol-1,3-monoisobutyrate (sold under the trade mark Texanol by Eastman Kodak), certain polyol ethers, (e.g. ethylene glycol monobutyl ether), a silicone oil or a halogenated solvent. One preferred solvent base is a mixture of about equal amounts of diesel oil or kerosene with a mixture of a $C_{6-10}$ alcohol. Another preferred solvent is mineral oil.

The rest of the slurry is made up of minor amounts of suspending agents, dispersants, and thinning agents.

The preferred suspending agent, the amount of which is 0.05—0.25 weight %, is an organophilic clay or hydroxypropyl cellulose. Hydroxypropyl methylcellulose, hydroxybutyl methylcellulose, aluminum/phosphate soaps, aluminum stearate/fatty acid soaps, dehydrated castor oil, fine-mesh fumed silica, quaternary salts of sodium cellulose (Soloid$^R$), and similar viscosifiers or thixotropic agents for the before-mentioned solvents can also be used.

The preferred dispersants, which are critical only to the most hydrophobic solvent systems, are ethoxylated linear alcohols. Fatty acid esters of vegetable or animal oils, ethoxylated nonyl phenols, and similar surfactants are also acceptable for dispersion of very hydrophobic solvents of the invention. Ethylene glycol monobutyl ether and other glycol ethers are used as dispersants in less hydrohobic solvent systems. When it is present, the amount of dispersant is 0.1—7.0 weight %.

The preferred thinning agent, when used, is lecithin. Lignosulfonate salts, salts of naphthalene formaldehyde condensate and naphthalene sulfonic acid condensate also can be used. The amount of thinning agent is 0.5—1 weight %, preferably 0.85—0.9 weight %.

The percentages of the above components should add up to 100%, so obviously selection of exact amounts from within these ranges can be made by those practising this invention.

The procedure to make the slurries is generally simple: The solvent base is put in a suitable container and agitated. The selected dispersing/suspending agents are added, and the polymer is then slowly added with agitation until a uniform slurry is obtained. Eductors attached to suitable containers equipped with circulating pumps can also acceptably mix the slurries.

The polymer slurries of this invention can be used in any application requiring aqueous polymers. They are particularly applicable in conditions of minimal mixing agitation given to the aqueous fluids to be viscosified. Dosages or formulation of the slurry are dependent upon the end use of the slurry or polymer. Such slurries are particularly useful in oil field applications. The polymer slurry is mixed into the water to be viscosified under agitation, in a volume sufficient to deliver the desired weight of the polymer, until the polymer is fully hydrated.

This invention is further illustrated by the following examples. In Formulation C, the quantities given, though not set out as weight percentages, produce compositions in accordance with the invention.

2

**Example 1**
**Mixing procedure for polymer slurry**
1. Place solvent in a suitable container.
2. Agitate solvent with sufficient shear to allow for incorporation of polymer in Step 4.
3. Add dispersing agents/suspending agents, as required.
4. Add polymer slowly. Mix until slurry is uniform.

### Typical slurry formulations

| Ingredients | weight % |
| --- | --- |
| Formulation A | |
| Octyl alcohol | 24.60 |
| Methanol | 2.50 |
| Hydroxypropyl cellulose | 0.25 |
| EGMBE (ethyleneglycol monobuytyl ether) | 0.30 |
| Diesel No. 1 | 21.50 |
| Lecithin | 0.86 |
| Fine mesh xanthan gum | 50.00 |
| | |
| Formulation B | |
| Texanol (ester alcohol—Eastman Kodak) | 46.57 |
| Methanol | 2.50 |
| Hydroxypropyl cellulose | 0.06 |
| Lecithin | 0.87 |
| Fine mesh xanthan gum | 50.00 |

| | per m³ of slurry | per 100 U.S. gal. of slurry |
| --- | --- | --- |
| Formulation C | | |
| Dodecyl (lauryl) alcohol | 320 L | 32 gal. |
| Methanol | 30 L | 3 gal. |
| Ethylene glycol monobutyl ether | 80 L | 8 gal. |
| Hydroxypropyl cellulose | 3 kg. | 2.5 lbs. |
| Kerosene | 300 L | 30 gal. |
| Lecithin | 12 kg. | 10 lb. |
| Fine-mesh xanthan gum | 582 kg | 485 lbs. |

**Claims**

1. A polymer slurry comprising 20—75 weight % of xanthan gum; 20—75 weight % hydrophobic solvent base; 0.05—0.25 weight % suspending agent; optionally 0.5—1 weight % thinning agent, optionally 0.1—7.0 weight % dispersant and optionally 2.5 weight % methanol, the percentages adding up to 100% and the hydrophobic solvent base being one that contains less than 0.1% water, that is insoluble in water and does not solvate or swell hydrophilic colloids, that has a melting point of no more than 30°C and a vapor pressure at 20°C of no more than 1 torr (133 Pa), and that is one or more of the following: mineral oil, diesel oil, kerosene, a mixture of diesel oil or kerosene with a $C_{6-12}$ alcohol, vegetable oil, an ester-alcohol, a polyol ether, a silicone oil or a halogenated solvent.

2. A slurry as claimed in Claim 1 in which the xanthan gum is of 200 mesh or finer, Tyler screen (sieve opening, 0.074 mm).

3. A slurry as claimed in Claim 1 or 2 in which the solvent base is a mixture of approximately equal amounts of diesel oil or kerosene with a $C_{6-10}$ alcohol.

4. A slurry as claimed in Claim 1, 2 or 3 in which the suspending agent is organophilic clay or hydroxypropyl cellulose.

5. A slurry as claimed in any preceding claim in which lecithin is included as the thinning agent.

6. A slurry as claimed in any preceding claim in which ethoxylated linear alcohols or fatty acid esters or vegetable or animal oils are included as the dispersant.

**Revendications**

1. Bouillie de polymère comprenant de 20 à 75% en poids de gomme de xanthane; de 20 à 75% en poids de base solvant hydrophobe; de 0,05 à 0.25% en poids d'agent de suspension; éventuellement de 0,5 à 1% en poids de fluidifiant, éventuellement de 0,1 à 7,0% en poids de dispersant et éventuellement 2,5% en poids de méthanol, les pourcentages s'ajoutant jusqu'à 100% et la base solvant hydrophobe étant une base contenant moins de 0,1% d'eau, qui est insoluble dans l'eau et ne solvate ni ne gonfle les collodes hydrophiles, qui a un point de fusion ne dépassante pas 30°C et

**0 016 640**

une pression de vapeur à 20°C ne dépassant pas 1 Torr (133 Pa), et qui est un ou plusieurs des corps suivants: huile minérale, gazole, kérosène, mélange de gazole ou de kérosène avec un alcool en $C_6$ à $C_{12}$, huile végétale, un ester-alcool, un polyol-éther, une huile de silicone ou un solvant halogéné.

2. Bouillie selon la revendication 1 où la gomme de xanthane a 200 mesh, ou plus fin, tamis Tyler (ouverture de maille de 0,074 mm).

3. Bouillie selon l'une des revendications 1 ou 2 où la base solvant est un mélange de quantités approximativement égales de gazole ou de kérosène avec un alcool en $C_6$ à $C_{10}$.

4. Bouillie selon l'une des revendications 1, 2 ou 3 où l'agent de suspension est une argile organophile ou l'hydroxypropylcellulose.

5. Bouillie selon l'une des revendications précédentes où la lécithine est incluse comme fluidifiant.

6. Bouillie selon l'une quelconque des revendications précédentes où l'on inclut comme dispersant des alcools linéaires éthoxylés, ou des esters d'acide gras, ou des huiles végétales ou animales.

**Patentansprüche**

1. Polymeraufschlämmung, enthaltend 20—75 Gew.-% Xanthangummi; 20—75 Gew.-% hydrophobe Lösungsmittelbasis; 0,05—0,25 Gew.-% Suspendiermittel; gegebenenfalls 0,5—1 Gew.-% Verdünnungsmittel, gegebenenfalls 0,1—7,0 Gew.-% Dispergiermittel und gegebenenfalls 2,5 Gew.-% Methanol, wobei sich die Prozentangaben auf 100% aufaddieren und die hydrophobe Lösungsmittelbasis weniger als 0,1% Wasser enthält, in Wasser unlöslich ist und hydrophobe Kolloide nicht solvatisiert oder quillt, einen Schmelzpunkt von nicht mehr als 30°C und einen Dampfdruck bei 20°C von nicht mehr als 1 Torr (133 Pa) aufweist, und eines oder mehrere der folgenden ist: Mineralöl, Dieselöl, Kerosin, ein Gemisch von Dieselöl oder Kerosin mit einem $C_{6-12}$-Alkohol, Pflanzenöl, ein Esteralkohol, ein Polyolether, ein Silikonöl oder ein halogeniertes Lösungsmittel.

2. Aufschlämmung nach Anspruch 1, in der der Xanthangummi 200 mesh oder feiner, Tyler-Sieb (Sieböffnung 0,074 mm) ist.

3. Aufschlämmung nach Anspruch 1 oder 2, in der die Lösungsmittelbasis ein Gemisch von etwa gleichen Mengen an Dieselöl oder Kerosin mit einem $C_{6-10}$-Alkohol ist.

4. Aufschlämmung nach Anspruch 1, 2 oder 3, in der das Suspendiermittel organophiler Ton oder Hydroxypropylcellulose ist.

5. Aufschlämmung nach einem der vorhergehenden Ansprüche, in die Lecithin als Verdünnungsmittel einbezogen ist.

6. Aufschlämmung nach einem der vorhergehenden Ansprüche, in die ethoxylierte lineare Alkohole oder Fettsäureester oder pflanzliche oder tierische Öle als Dispergiermittel einbezogen sind.